# EUROPÄISCHE PATENTSCHRIFT

(11) **EP 3 194 055 B1**
(45) Veröffentlichungstag und Bekanntmachung des Hinweises auf die Patenterteilung: **28.11.2018**
(21) Anmeldenummer: 15774879.9
(22) Anmeldetag: 17.09.2015
(51) Int. Cl.: B01D 63/08, B01D 25/26

(54) **FILTRATIONSMODUL UND VERFAHREN ZUR HERSTELLUNG**
FILTRATION MODULE AND METHOD FOR PRODUCING SAME
MODULE DE FILTRATION ET PROCÉDÉ DE FABRICATION

(30) Priorität: 18.09.2014 DE 102014113497
(43) Veröffentlichungstag der Anmeldung: 26.07.2017
(73) Patentinhaber: Sartorius Stedim Biotech GmbH, 37079 Göttingen (DE)
(72) Erfinder: KRUMBEIN, Thomas, 37136 Ebergötzen (DE)
(74) Vertreter: Schneider, Peter Christian
(86) Internationale Anmeldenummer: PCT/EP2015/071297
(87) Internationale Veröffentlichungsnummer: WO 2016/042062

(56) Entgegenhaltungen:
- DE-A1- 2 521 977
- DE-A1- 2 632 078
- DE-A1- 4 432 628
- US-A- 4 268 372
- US-A1- 2008 257 813
- US-A1- 2013 239 812
- US-A1- 2014 008 290

## Beschreibung

### Gebiet der Erfindung

Die Erfindung betrifft ein Filtrationsmodul mit einer Filtereinheit, bei der zwischen einer ersten Platte und einer zweiten Platte mindestens ein Filterelement angeordnet ist, welches mindestens eine Lage Filtermaterialenthält, wobei die zwischen den Platten angeordneten Lagen jeweils am peripheren Umfang durch eine Randabdichtung abgedichtet sind, und wobei die Platten durch Anpressmittel gegeneinander gepresst sind.

Die Erfindung betrifft weiterhin ein Verfahren zur Herstellung eines Filtrationsmoduls nach einem der Ansprüche 1 bis 14.

### Stand der Technik

Aus der DE 44 32 628 A1 ist ein Filtrationsmodul und ein Verfahren zu seiner Herstellung bekannt. Das Filtrationsmodul weist eine Filtereinheit auf, bei der zwischen einer ersten Platte und einer zweiten Platte zwischen Gewebeschichten Membranadsorber angeordnet sind. Die Schichten weisen jeweils an ihrem peripheren Umfang eine Randabdichtung auf.

Nachteilig bei der bekannten Vorrichtung, die sich grundsätzlich bewährt hat, ist, dass die beiden Platten über eine Mehrzahl einer Art von seitlich anordenbaren Schraubzwingen als Anpressmittel gegen einander gepresst werden. Dies ist relativ aufwendig und kann zu einer ungleichen Druckverteilung am Umfang führen.

Aus der US 2008/0257813 A1 ist ein ist ein Filtrationsmodul und ein Verfahren zu seiner Herstellung bekannt, bei dem das Filtrationsmodul zwei Platten aufweist, die an ihren einander zugewandten Anlageflächen Rastverbindungen aufweisen, bei denen Rasthaken der ersten Platte in entsprechenden Rastaufnahmen der zweiten Platte verrasten können.

Nachteilig dabei ist, dass es relativ schwierig ist, eine sichere Verrastung einerseits und den notwendigen Anpressdruck andererseits zu erzeugen. Zudem wird eine Mehrzahl von Rastverbindungen benötigt um einen gleichmäßigen Anpressdruck zu erzielen.

### Aufgabenstellung

Es ist die Aufgabe der vorliegenden Erfindung, die bekannten Vorrichtungen und Verfahren so zu verbessern, dass sie mit weniger Teilen einfacher aufgebaut sind und kostengünstiger und schneller aber trotzdem sicher hergestellt werden können.

### Darlegung der Erfindung

Die Aufgabe bezüglich der Vorrichtung wird in Verbindung mit den Merkmalen des Oberbegriffs von Anspruch 1 dadurch gelöst, dass das Anpressmittel als ein federndes Umklammerungsprofil ausgebildet ist, das die Platten an ihren gegenüberliegenden Seitenflächen umgreift und dass das Umklammerungsprofil einen Boden aufweist, der quer zur Längsrichtung der Platten nach innen gewölbt ist und der in Längsrichtung durch seitliche Klammern begrenzt ist, die an ihren freien Enden nach innen abgebogen sind und die mit ihren abgebogenen Enden die dem Boden abgewandte Oberfläche der dem Boden abgewandten ersten Platte seitlich umklammern.

Durch die Ausbildung des Anpressmittels als federndes Umklammerungsprofil kann die Anpresskraft über die Geometrie und Federkraft des Materials vorbestimmt und sichergestellt werden. Dadurch, dass die Platten an ihren gegenüberliegenden Seitenflächen über deren gesamte Länge umgriffen werden, erfolgt zudem eine gleichmäßige Verteilung der Anpresskraft und eine sichere Verbindung mit nur einem Anpressmittel. Durch die gewölbte Anordnung des Bodens des Umklammerungsprofils und die seitlich angeordneten Klammern, deren freie Enden nach innen gebogen sind und sich an der Oberfläche der ersten Platte abstützen, wird eine Vorspannung erzielt, die den notwendigen Anpressdruck dauerhaft unterstützt. Die Vorrichtung weist weniger Teile auf und ist schneller, einfacher und kostengünstiger herstellbar.

Bevorzugte Ausführungsformen sind Gegenstand der abhängigen Ansprüche.

Gemäß einer bevorzugten Ausführungsform der Erfindung enthält das Filterelement zusätzlich als erste Lage ein Anströmmaterial und als letzte Lage ein Abströmmaterial. Das Anström- oder Abströmmaterial kann insbesondere ein Gewebe, Vlies, Gewirk, Netz, Gitter, Lochplatte oder ähnliches sein.

Gemäß einer weiteren bevorzugten Ausführungsform der Erfindung weist das Filterelement mit seinen zwischen den Platten angeordneten Lagen eine gemeinsame periphere umlaufende Randabdichtung auf. Dies vereinfacht die Montage erheblich.

Nach einer bevorzugten Ausführungsform der Erfindung ist die mindestens eine Lage Filtermaterial ein Oberflächen- oder Tiefenfilter, der Adsorptions- oder Mikrofiltrationseigenschaften aufweist. Als Oberflächenfilter können beispielsweise Membranen und als Tiefenfilter kann ein Fasermaterial eingesetzt werden. Weiter können Filtermaterialien mit Adsorbereigenschaften und grundsätzlich auch Ultrafilter eingesetzt werden.

Nach einer weiteren bevorzugten Ausführungsform der Erfindung weisen die dem Filterelement zugewandten Flächen der Platten Strömungspfade auf. Die Strömungspfade können insbesondere die Funktion von An-und/oder Abströmmaterial oder An-und/oder Abströmgewebe erfüllen.

Nach einer weiteren bevorzugten Ausführungsform der Erfindung sind die seitlichen Klammern quer zur Längsrichtung der Platten nach außen gewölbt.

Durch die Wölbung der seitlichen Klammern wird durch eine gewisse Streckung beim Umgreifen oder Umklammern der Platten eine weitere Vorspannung zur Unterstützung des Anpressdrucks erzeugt.

Gemäß einer bevorzugten Ausführungsform der Erfindung sind die abgebogenen freien Enden der Klammern rückwärtsgerichtet abgebogen, wobei ihre Stirnflächen gegen die dem Boden abgewandte Oberfläche der dem Boden abgewandten ersten Platte pressen.

Durch die rückwärts gerichtet abgebogenen freien Enden der Klammern und die Kraftübertragung orthogonal zu den Platten wird durch die Stirnflächen der freien Enden der Klammern jeweils eine definierte Krafteinleitungslinie sichergestellt.

Gemäß einer weiteren bevorzugten Ausführungsform der Erfindung weist die dem Boden des Umklammerungsprofiles zugewandte zweite Platte an ihrer dem Boden zugewandten Unterseite quer zur Längsrichtung nach innen zu ihrer der Unterseite abgewandten Oberseite hin eine Wölbung auf, deren Wölbungsradius größer ist als der Wölbungsradius des Bodens des Umklammerungsprofiles. Dabei können die beiden Wölbungen den gleichen Scheitelpunkt haben.

Nach weiteren bevorzugten Ausführungsform der Erfindung weist die dem Boden des Umklammerungsprofiles abgewandte erste Platte an ihrer dem Boden abgewandten Oberfläche parallel zu ihren in Längsrichtung verlaufenden Seitenflächen jeweils eine erhabene Rastschiene auf, die jeweils von den freien Enden der seitlichen Klammern hintergriffen sind.

Durch die Rastschienen, die mit den freien Enden der seitlichen Klammern verrasten, wird ein unbeabsichtigtes Entrasten zuverlässig vermieden.

Nach einer weiteren bevorzugten Ausführungsform der Erfindung weisen die Rastschienen seitlich zu den Seitenflächen hin schräg abfallende konkave äußere Seitenflächen auf.

Durch die schräg abfallenden äußeren Seitenflächen wird die Verrastung bei der Montage erleichtert.

Gemäß einer weiteren bevorzugten Ausführungsform der Erfindung ist die erste Platte als eine Anströmplatte und die zweite Platte als eine Abströmplatte ausgebildet. Die Filtereinheit ist bevorzugt für Crossflow- oder Dead-end-Filtrationen ausgebildet.

Die Filtereinheit und/oder das Umklammerungsprofil sind bevorzugt aus Kunststoff ausgebildet

Die Aufgabe bezüglich des Verfahrens wird in Verbindung mit dem Oberbegriff des Anspruches 10 dadurch gelöst, dass die folgenden Schritte durchgeführt werden:
a) Auflegen der zwischen den Platten anzuordnenden Lagen, die am peripheren Umfang durch eine gemeinsame Randabdichtung abgedichtet sind, auf die der ersten Platte zugewandte Oberfläche der zweiten Platte,
b) Aufsetzen der ersten Platte mit ihrer der zweiten Platte zugewandten Unterseite auf die ihr zugewandte Fläche der gemeinsamen Randabdichtung der Lagen, und
c) Eindrücken der Filtereinheit in das federnde Umklammerungsprofil bis die Platten an ihren gegenüberliegenden Seitenflächen umgriffen werden.

Durch die erfindungsgemäße Ausbildung der Vorrichtung wird auch das Verfahren zu ihrer Herstellung erheblich vereinfacht, so dass die Vorrichtung in wenigen Schritten und mit weniger Teilen einfacher, schneller, kostengünstiger und trotzdem sicher hergestellt werden kann.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine räumliche Darstellung eines Filtrationsmoduls in einer endverrasteten Stellung;
- Figur 2:: eine räumliche Darstellung des Filtrationsmoduls von Figur 1 in einer teilverrasteten Stellung;

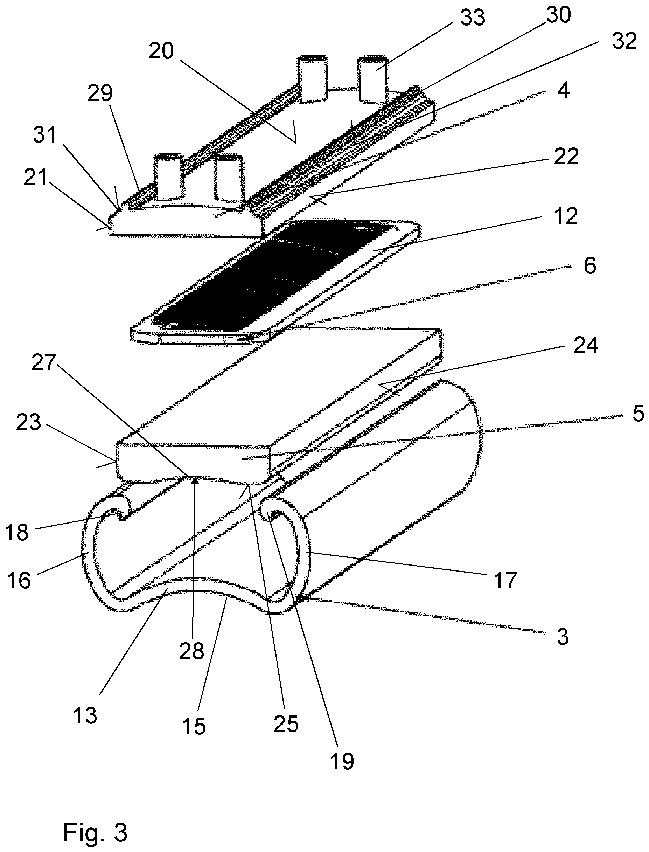

- Figur 3:: eine Explosionsdarstellung des Filtrationsmoduls von Figur 1;

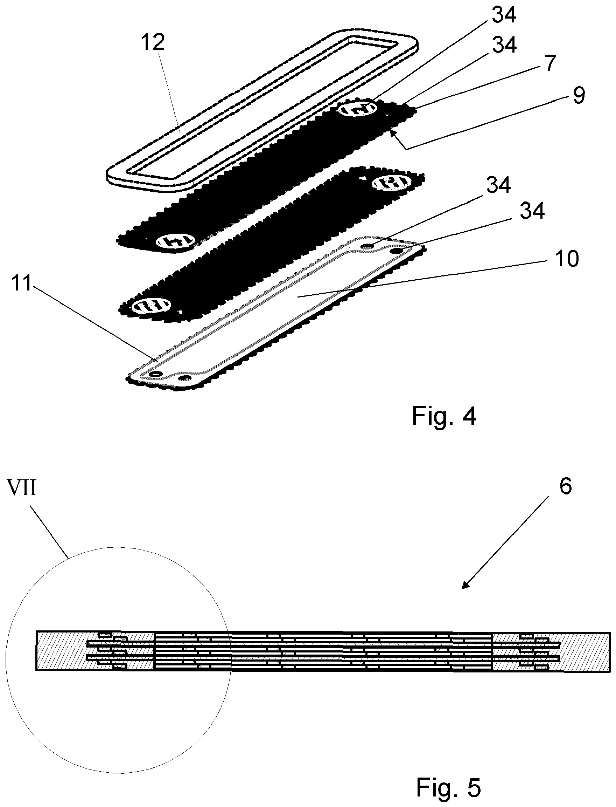

- Figur 4:: eine räumliche Darstellung der Filterelemente von Figur 1 als Explosionsdarstellung;
- Figur 5:: eine Seitenansicht der Filterelemente von Figur 1 im Schnitt;

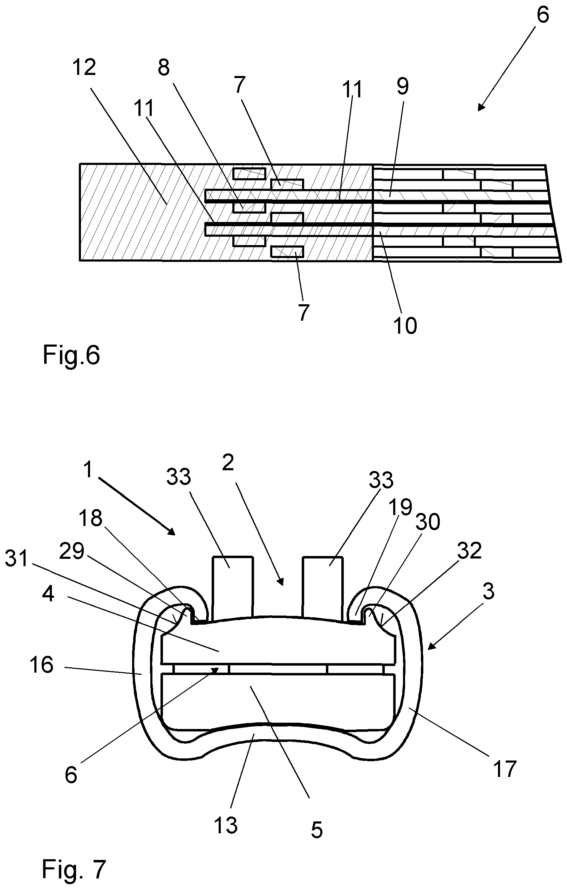

- Figur 6:: eine vergrößerte Darstellung im Ausriss der Einzelheit VI von Figur 5; und
- Figur 7:: eine Seitenansicht des Filtrationsmoduls von Figur 1 aus Richtung VII.

### Beschreibung bevorzugter Ausführungsformen

Ein Filtrationsmodul 1 besteht im Wesentlichen aus einer Filtereinheit 2 und einem Umklammerungsprofil 3. Dabei weist die Filtereinheit 2 eine erste Platte 4 und eine zweite Platte 5 auf. Zwischen den beiden Platten 4, 5 ist eine Filterelement 6 angeordnet. Das Filterelement 6 ist als ein mehrschichtiges Filtermodul ausgebildet, das zwischen einer Lage Anströmgewebe 7 und einer Lage Abströmgewebe 8 eine erste Lage Filtermaterial 9 aufweist. In den Ausführungsbeispielen ist zwischen der Lage Abströmgewebe 8 und einer weiteren Lage Anströmgewebe 7 eine zweite Lage Filtermaterial 10 angeordnet. Die Lagen des Filtermaterials 9, 10 weisen zur zwischen ihnen angeordneten Lage Abströmgewebe 8 hin jeweils einen Dichtrahmen 11 auf. Die das Filterelement 6 bildenden Lagen 7, 8, 9, 10 weisen eine gemeinsame periphere umlaufende Randabdichtung 12 auf. Die Randabdichtung 12 ist aus einem Elastomer ausgebildet, das außen angegossen ist.

Das Umklammerungsprofil 3 weist einen Boden 13 auf, der quer zur Längsrichtung 14 der Platten 4, 5 um einen Wölbungsradius 15 nach innen gewölbt ist und der in Längsrichtung 14 durch seitliche Klammern 16, 17 begrenzt ist, die an ihren freien 18, 19 innen abgebogen sind, und die mit ihren abgebogenen Enden 18, 19 die dem Boden 13 abgewandte Oberfläche 20 der dem Boden 13 abgewandten ersten Platte 4 seitlich umklammern. Dabei sind die abgebogenen freien Enden 18, 19 der Klammern 16, 17 rückwärtsgerichtet abgebogen, wobei ihre Stirnflächen gegen die Oberfläche 20 der ersten Platte 4 gepresst sind.

Die seitlichen Klammern 16, 17 sind quer zur Längsrichtung 14 der Platten 4, 5 nach außen, d.h. von den Seitenflächen 21, 22 der ersten Platte 4 und den Seitenflächen 23, 24 der zweiten Platte 5 weggerichtet, gewölbt. Die zweite Platte 4 weist an ihrer dem Boden 13 zugewandten Unterseite 25 quer zur Längsrichtung 14 nach innen, d.h. zu ihrer der Unterseite 25 abgewandten Oberseite 26 hin eine Wölbung 27 auf, deren Wölbungsradius 28 größer ist als der Wölbungsradius 15 des Bodens 13.

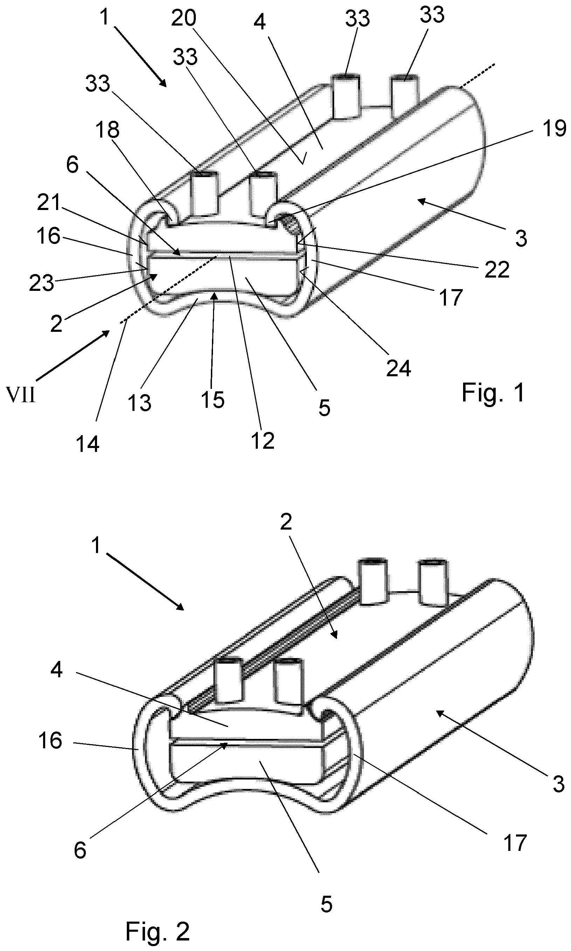

Die erste Platte 4 weist an ihrer Oberfläche 20 parallel zu ihren in Längsrichtung 14 verlaufenden Seitenflächen 21, 22 jeweils eine erhabene Rastschiene 29, 30 auf. In einem voll verrasteten Zustand werden die Rastschienen 29, 30 von den freien Enden 18, 19 der Klammern 16, 17 hintergriffen. Die Rastschienen 29, 30 weisen seitlich zu den Seitenflächen 21, 22 hin schräg abfallende konkave äußere Seitenflächen 31, 32 auf. Auf die äußeren Seitenflächen 31, 32 stützen sich die freien Enden 18, 19 der seitlichen Klammern 16, 17 in einer teilverrasteten Stellung ab (siehe Figur 2).

Gemäß den Ausführungsbeispielen ist die erste Platte 4 als eine Anströmplatte und die zweite Platte 5 als eine Abströmplatte ausgebildet. Die erste Platte 4 besitzt die aus dem Cross-Flow-Bereich bekannten und üblichen Anschlüsse 33 für Feed, Retentat und Permeat (zweimal).

Zur Herstellung des Filtrationsmoduls 1 wird zwischen der ersten Platte 4 und der zweiten Platte 5 das Filterelement 6 gelegt. Die Öffnungen 34 des Filterelements 6 sind dabei deckungsgleich mit den Anschlüssen 33 der ersten Platte 4. Die dadurch gebildete Filtereinheit 2 wird in das Umklammerungsprofil 3 soweit eingelegt, dass die freien Enden 18, 19 der Klammern 16, 17 auf den äußeren Seitenflächen 31, 32 der Rastschienen 29, 30 in einer Teilraststellung aufliegen.

Nachfolgend werden die seitlichen gewölbten Klammern 16, 17 zusammengepresst, bis die offenen Enden des Umklammerungsprofil 3 über die Rastschienen 29, 30 greifen und in der Endstellung verrasten. Durch diesen Vorgang werden die gewölbten Klammern 16, 17 nach innen und ihre freien Enden 18, 19 nach oben bewegt. Beide Bewegungen bewirken eine Vergrößerung des Radius der Wölbung im Bereich des Bodens 13 und der Radien der Wölbung im Bereich der Klammern 16, 17. Die daraus entstehende Spannung zieht die erste Platte 4 gegen die zweite Platte 5 und verpresst das Filterelement 6 zwischen den Platten 4, 5. Durch das Verpressen wird das Filterelement 6 gegenüber den Platten 4, 5 so abgedichtet, dass keine Flüssigkeit nach außen entweichen kann und im inneren der Filtereinheit 2 die Kanäle für Filtrat und Unfiltrat gegeneinander abgedichtet werden.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben.

### Bezugszeichenliste

- 1: Filtermodul
- 2: Filtereinheit
- 3: Umklammerungsprofil
- 4: erste Platte von 2
- 5: zweite Platte von 2
- 6: Filterelement von 2
- 7: Lage Anströmgewebe von 6
- 8: Lage Abströmgewebe von 6
- 9: erste Lage Filtermaterial von 6
- 10: zweite Lage Filtermaterial von 6
- 11: Dichtrahmen
- 12: Randabdichtung
- 13: Boden von 3
- 14: Längsrichtung von 1
- 15: Wölbungsradius von 13
- 16: erste Klammer von 3
- 17: zweite Klammer von 3
- 18: freies Ende von 16
- 19: freies Ende von 17
- 20: Oberfläche von 4
- 21: Seitenfläche von 4
- 22: Seitenfläche von 4
- 23: Seitenfläche von 5
- 24: Seitenfläche von 5
- 25: Unterseite von 5
- 26: Oberfläche von 5
- 27: Wölbung von 5
- 28: Wölbungsradius von 27
- 29: Rastschiene von 20
- 30: Rastschiene von 20
- 31: äußere Seitenfläche von 29
- 32: äußere Seitenfläche von 30
- 33: Anschluss
- 34: Öffnung von 6

## Patentansprüche

1. Filtrationsmodul (1) mit einer Filtereinheit (2), bei der zwischen einer ersten Platte (4) und einer zweiten Platte (5) mindestens ein Filterelement (6) angeordnet ist, welches mindestens eine Lage Filtermaterial (9, 10) enthält, wobei die zwischen den Platten (4, 5) angeordneten Lagen (9, 10) jeweils am peripheren Umfang durch eine Randabdichtung (12) abgedichtet sind, und wobei die Platten (4, 5) durch Anpressmittel gegeneinander gepresst sind,
**dadurch gekennzeichnet,**
**dass** das Anpressmittel als ein federndes Umklammerungsprofil (3) ausgebildet ist, das die Platten (4, 5) an ihren gegenüberliegenden Seitenflächen (21, 22, 23, 24) umgreift und
**dass** das Umklammerungsprofil (3) einen Boden (13) aufweist, der quer zur Längsrichtung (14) der Platten (4, 5) nach innen gewölbt ist und der in Längsrichtung (14) durch seitliche Klammern (16, 17) begrenzt ist, die an ihren freien Enden (18, 19) nach innen abgebogen sind und die mit ihren abgebogenen Enden die dem Boden (13) abgewandte Oberfläche (20) der dem Boden (13) abgewandten ersten Platte (4) seitlich umklammern.

2. Filtrationsmodul (1) nach Anspruch 1,
**dadurch gekennzeichnet,**
**dass** das Filterelement (6) zusätzlich enthält als erste Lage ein Anströmmaterial (7) und als letzte Lage ein Abströmmaterial (8).

3. Filtrationsmodul nach Anspruch 1 oder 2,
**dadurch gekennzeichnet,**
**dass** das Filterelement (6) mit seinen zwischen den Platten (4, 5) angeordneten Lagen (7, 8, 9, 10) eine gemeinsame periphere umlaufende Randabdichtung (12) aufweist.

4. Filtrationsmodul nach einem der Ansprüche 1 bis 3,
**dadurch gekennzeichnet,**
**dass** die mindestens eine Lage Filtermaterial (9, 10) ein Oberflächen- oder Tiefenfilter mit Adsorptions- oder Mikrofiltrationseigenschaften ist.

5. Filtrationsmodul nach einem der Ansprüche 1 bis 4,
**dadurch gekennzeichnet,**
**dass** die dem Filterelement (6) zugewandten Flächen (25) der Platten (4, 5) Strömungspfade aufweisen.

6. Filtrationsmodul nach einem der Ansprüche 1 bis 5,
**dadurch gekennzeichnet,**
**dass** die abgebogenen freien Enden (18, 19) der Klammern (16, 17) rückwärtsgerichtet abgebogen sind und
**dass** ihre Stirnflächen gegen die dem Boden (13) abgewandte Oberfläche (20) der dem Boden (13) abgewandten ersten Platte (4) pressen.

7. Filtrationsmodul nach einem der Ansprüche 1 bis 6,
**dadurch gekennzeichnet,**
**dass** die seitlichen Klammern (16, 17) quer zur Längsrichtung (14) der Platten (4, 5) nach außen gewölbt sind.

8. Filtrationsmodul nach einem der Ansprüche 1 bis 7,
**dadurch gekennzeichnet,**
**dass** die dem Boden (13) des Umklammerungsprofiles (3) zugewandte zweite Platte (5) an ihrer dem Boden (13) zugewandten Unterseite (25) quer zur Längsrichtung (14) nach innen zu ihrer der Unterseite (25) abgewandten Oberseite (26) hin eine Wölbung (27) aufweist, deren Wölbungsradius (28) größer ist als der Wölbungsradius (15) des Bodens (13) des Umklammerungsprofiles (3).

9. Filtrationsmodul nach einem der Ansprüche 1 bis 8,
**dadurch gekennzeichnet,**
**dass** die dem Boden (13) des Umklammerungsprofiles (3) abgewandte erste Platte (4) an ihrer dem Boden (13) abgewandten Oberfläche (20) parallel zu ihren in Längsrichtung (14) verlaufenden Seitenflächen (21, 22, 23, 24) jeweils eine erhabene Rastschiene (29, 30) aufweist, die von den freien Enden (18, 19) der seitlichen Klammern (16, 17) hintergriffen sind.

10. Filtrationsmodul nach Anspruch 9,
**dadurch gekennzeichnet,**
**dass** die Rastschienen (29, 30) seitlich zu den Seitenflächen (21, 22, 23, 24) hin schräg abfallende konkave äußere Seitenflächen (31, 32) aufweisen.

11. Filtrationsmodul nach einem der Ansprüche 1 bis 10,
**dadurch gekennzeichnet,**
**dass** die erste Platte (4) als eine Anströmplatte und die zweite Platte (5) als eine Abströmplatte ausgebildet ist.

12. Filtrationsmodul nach einem der Ansprüche 1 bis 11,
**dadurch gekennzeichnet,**
**dass** die Filtereinheit (2) für Crossflow- oder Dead-end-Filtrationen ausgebildet ist.

13. Filtrationsmodul nach einem der Ansprüche 1 bis 12
**dadurch gekennzeichnet,**
**dass** die Filtereinheit (2) und/oder das Umklammerungsprofil (3) aus Kunststoff ausgebildet sind.

14. Verfahren zur Herstellung eines Filtrationsmoduls nach einem der Ansprüche 1 bis 13,
**dadurch gekennzeichnet,**
**dass** die folgenden Schritte durchgeführt werden:
a) Auflegen der zwischen den Platten (4, 5) anzuordnenden Lagen (7, 8, 9, 10), die am peripheren Umfang durch eine gemeinsame Randabdichtung (12) abgedichtet sind, auf die der ersten Platte (4) zugewandte Oberfläche (20) der zweiten Platte (20),
b) Aufsetzen der ersten Platte (4) mit ihrer der zweiten Platte (5) zugewandten Unterseite (25) auf die ihr zugewandte Fläche der gemeinsamen Randabdichtung (12) der Lagen (7, 8, 9, 10), und
c) Eindrücken der Filtereinheit (2) in das federnde Umklammerungsprofil (3) bis die Platten (4, 5) an ihren gegenüberliegenden Seitenflächen (21, 22, 23, 24) umgriffen werden.

## Claims

1. A filtration module (1) with a filter unit (2) in which, between a first plate (4) and a second plate (5), at least one filter element (6) is arranged which contains at least one layer of filter material (9, 10), wherein the layers (9, 10) arranged between the plates (4, 5) are each sealed off at the periphery by an edge seal (12), and wherein the plates (4, 5) are pressed against each other by pressing means,
**characterized in that**
the pressing means is designed as a resilient bracketing profile (3) which engages around the plates (4, 5) at their mutually opposite side surfaces (21, 22, 23, 24), and that the bracketing profile (3) has a base (13) which curves inward transversely with respect to the longitudinal direction (14) of the plates (4, 5) and which is delimited in the longitudinal direction (14) by lateral brackets (16, 17) which are bent inward at their free ends (18, 19) and which, with their bent ends, engage laterally around the surface (20), facing away from the base (13), of the first plate (4) facing away from the base (13).

2. The filtration module (1) according to Claim 1,
**characterized in that**
the filter element (6) additionally contains an inflow material (7) as a first layer and an outflow material (8) as a final layer.

3. The filtration module according to Claim 1 or 2,
**characterized in that**
the filter element (6) with its layers (7, 8, 9, 10) arranged between the plates (4, 5) has a common peripheral edge seal (12).

4. The filtration module according to any of Claims 1 to 3,
**characterized in that**
the at least one layer of filter material (9, 10) is a surface or depth filter with adsorption or microfiltration properties.

5. The filtration module according to any of Claims 1 to 4,
**characterized in that**
the surfaces (25) of the plates (4, 5) facing toward the filter element (6) have flow paths.

6. The filtration module according to any of Claims 1 to 5,
**characterized in that**
the bent free ends (18, 19) of the brackets (16, 17) are bent backwards and that their end faces press against the surface (20), facing away from the base (13), of the first plate (4) facing away from the base (13).

7. The filtration module according to any of Claims 1 to 6,
**characterized in that**
the lateral brackets (16, 17) are curved outwards transversely to the longitudinal direction (14) of the plates (4, 5).

8. The filtration module according to any of Claims 1 to 7,
**characterized in that**
on its underside (25) facing toward the base (13), the second plate (5) facing toward the base (13) of the bracketing profile (3) has an inward curvature (27) transverse to the longitudinal direction (14) and oriented toward the upper side (26) facing away from the underside (25), the curvature radius (28) of which is larger than the curvature radius (15) of the base (13) of the bracketing profile (3).

9. The filtration module according to any of Claims 1 to 8,
**characterized in that**
on its surface (20) facing away from the base (13), the first plate (4) facing away from the base (13) of the bracketing profile (3) has, parallel to each of its side surfaces (21, 22, 23, 24) extending in the longitudinal direction (14), a raised latching ridge (29, 30) which is engaged from behind by the free ends (18, 19) of the lateral brackets (16, 17).

10. The filtration module according to Claim 9,
**characterized in that**
the latching ridges (29, 30) have concave outer side surfaces (31, 32) which slant laterally downward toward the side surfaces (21, 22, 23, 24).

11. The filtration module according to any of Claims 1 to 10,
**characterized in that**
the first plate (4) is designed as an inflow plate and the second plate (5) is designed as an outflow plate.

12. The filtration module according to any of Claims 1 to 11,
**characterized in that**
the filter unit (2) is designed for crossflow or dead-end filtration.

13. The filtration module according to any of Claims 1 to 12,
**characterized in that**
the filter unit (2) and/or the bracketing profile (3) is made of plastic.

14. A method for producing a filtration module according to any of Claims 1 to 13,
**characterized in that**
the following steps are carried out:
a) the layers (7, 8, 9, 10), which are to be arranged between the plates (4, 5) and which are sealed off at the periphery by a common edge seal (12), are placed onto the surface (20) of the second plate (20), which surface faces toward the first plate (4),
b) the first plate (4), with its underside (25) facing toward the second plate (5), is placed onto the surface, facing toward the first plate, of the common edge seal (12) of the layers (7, 8, 9, 10), and
c) the filter unit (2) is pressed into the resilient bracketing profile (3) until the plates (4, 5) are engaged around their mutually opposite side surfaces (21, 22, 23, 24).

## Revendications

1. Module de filtration (1) qui comporte une unité de filtration (2), dans lequel, entre une première plaque (4) et une seconde plaque (5), est disposé au moins un élément de filtration (6) dont au moins une couche contient un matériau filtrant (9, 10) ; les couches (9, 10) disposées entre les plaques (4, 5) sont chacune rendues étanches au niveau de la périphérie par une garniture d'étanchéité de bord (12) et les plaques (4, 5) sont pressées l'une contre l'autre par un moyen de pression ;
**caractérisé en ce que**
le moyen de pression est configuré en profilé de serrage élastique (3) qui enserre les plaques (4, 5) au niveau de leurs faces latérales opposées (21, 22, 23, 24) et le profilé de serrage (3) comporte un fond (13) qui est incurvé vers l'intérieur transversalement à la direction longitudinale (14) des plaques (4, 5) et qui est délimité dans la direction longitudinale (14) par des brides latérales (16, 17) qui sont pliées vers l'intérieur au niveau de leurs extrémités libres (18, 19) et qui serrent latéralement, avec leurs extrémités pliées, la surface (20), dos vers le fond (13), de la première plaque (4) dos vers le fond (13).

2. Module de filtration (1) selon la revendication 1,
**caractérisé en ce que**
l'élément de filtration (6) contient en outre comme première couche un matériau d'entrée (7) et comme couche finale un matériau de sortie (8).

3. Module de filtration selon la revendication 1 ou 2,
**caractérisé en ce que**
l'élément de filtration (6), avec ses couches (7, 8, 9, 10) disposées entre les plaques (4, 5), comporte une garniture d'étanchéité de bord périphérique commune (12).

4. Module de filtration selon la revendication 1 ou 2,
**caractérisé en ce que**
la au moins une couche du matériau de filtration (9, 10) est un filtre de surface ou en profondeur qui possède des propriétés d'absorption ou de microfiltration.

5. Module de filtration selon l'une des revendications 1 à 4,
**caractérisé en ce que**
les surfaces (25) des plaques (4, 5) tournées vers l'élément de filtration (6) comportent des chemins d'écoulement.

6. Module de filtration selon l'une des revendications 1 à 5,
**caractérisé en ce que**
les extrémités pliées libres (18, 19) des brides (16, 17) sont pliées vers l'arrière et **en ce que** leurs faces d'extrémité s'appuient contre la surface (20), dos tourné au fond (13), de la première plaque (4), dos tourné au fond (13).

7. Module de filtration selon l'une des revendications 1 à 6,
**caractérisé en ce que**
les brides latérales (16, 17) sont incurvées vers l'extérieur transversalement à la direction longitudinale (14) des plaques (4, 5).

8. Module de filtration selon l'une des revendications 1 à 7,
**caractérisé en ce que**
sur son côté inférieur (25) tourné au fond (13), la seconde plaque (5) tournée au fond (13) du profilé de serrage (3) comporte une incurvation vers l'intérieur (27) transversale à la direction longitudinale (14) et orientée vers le côté supérieur (26), dos au côté inférieur (25), son rayon d'incurvation (28) étant plus grand que le rayon d'incurvation (15) du fond (13) du profilé de serrage (3).

9. Module de filtration selon l'une des revendications 1 à 8,
**caractérisé en ce que**
sur sa surface (20), le dos au fond (13), la première plaque (4), le dos au fond (13) du profilé de serrage (3), comporte, parallèlement à chacune de ses surfaces latérales (21, 22, 23, 24) s'étendant dans la direction longitudinale (14), une arête d'enclenchement surélevée (29, 30) qui est engagée de l'arrière par les extrémités libres (18, 19) des brides latérales (16, 17).

10. Module de filtration selon la revendication 9,
**caractérisé en ce que**
les arêtes d'enclenchement (29, 30) comportent des surfaces latérales externes concaves (31, 32) qui s'inclinent latéralement en direction du bas vers les surfaces latérales (21, 22, 23, 24).

11. Module de filtration selon l'une des revendications 1 à 10,
**caractérisé en ce que**
la première plaque (4) est configurée en plaque d'entrée et la seconde plaque (5) est configurée en plaque de sortie.

12. Module de filtration selon l'une des revendications 1 à 11,
**caractérisé en ce que**
l'unité de filtration (2) est configurée pour une filtration tangentielle ou frontale.

13. Module de filtration selon l'une des revendications 1 à 12,
**caractérisé en ce que**
l'unité de filtration (2) et/ou le profilé de serrage (3) est en matière plastique.

14. Procédé de fabrication d'un module de filtration selon l'une des revendications 1 à 13,
**caractérisé en ce que**
ledit procédé consiste dans les étapes suivantes :
a) placer les couches (7, 8, 9, 10), qui doivent être disposées entre les plaques (4, 5) et qui
sont rendues étanches au niveau de la périphérie par une garniture d'étanchéité de bord commune (12), sur la surface (20) de la seconde plaque (20), qui est tournée vers la première plaque (4),
b) placer la première plaque (4), avec son côté inférieur (25) tourné vers la seconde plaque (5), sur la surface, tournée vers le côté inférieur, de la garniture d'étanchéité de bord commune (12) des couches (7, 8, 9, 10), et
c) presser l'unité de filtration dans le profilé de serrage élastique (3) jusqu'à ce que les plaques (4, 5) soient enserrées au niveau de leurs faces latérales opposées (21, 22, 23, 24).
